(19) Europäisches Patentamt / European Patent Office / Office européen des brevets

(11) **EP 4 738 176 A1**

(12) **EUROPEAN PATENT APPLICATION**
published in accordance with Art. 153(4) EPC

(43) Date of publication:
06.05.2026 Bulletin 2026/19

(21) Application number: 24830133.5

(22) Date of filing: 30.04.2024

(51) International Patent Classification (IPC):
*G06F 30/20* (2020.01)    *G06F 119/02* (2020.01)
*G06F 119/04* (2020.01)   *G06F 119/08* (2020.01)
*G06F 119/14* (2020.01)

(52) Cooperative Patent Classification (CPC):
Y02E 30/30

(86) International application number:
PCT/CN2024/090718

(87) International publication number:
WO 2025/001485 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.06.2023 CN 202310790182

(71) Applicant: Shanghai Nuclear Engineering
Research &
Design Institute Co., Ltd.
Shanghai 200233 (CN)

(72) Inventors:
• PAN, Keqi
  Shanghai 200233 (CN)

• ZHOU, Shaochong
  Shanghai 200233 (CN)
• YIN, Haifeng
  Shanghai 200233 (CN)
• HU, Zhelin
  Shanghai 200233 (CN)
• LI, Juan
  Shanghai 200233 (CN)
• LU, Qiang
  Shanghai 200233 (CN)
• CHEN, Xingwen
  Shanghai 200233 (CN)
• FENG, Shaodong
  Shanghai 200233 (CN)

(74) Representative: Patentanwälte
Ruff, Wilhelm, Beier, Dauster & Partner mbB
Kronenstraße 30
70174 Stuttgart (DE)

(54) **CREEP FATIGUE STATE EVALUATION METHOD AND SYSTEM FOR HIGH-TEMPERATURE NUCLEAR POWER DEVICE**

(57) Provided in the present application are a creep fatigue state evaluation method and system for a high-temperature nuclear power device, the creep fatigue state evaluation method for a high-temperature nuclear power device comprising: acquiring an isochronous stress-strain curve of the device, and deducing creep data and plastic strain data of device materials according to the isochronous stress-strain curve; calculating creep constitutive parameters of the device materials according to the creep data of the device materials; performing inelastic creep analysis according to the creep constitutive parameters to acquire a time history of a stress parameter and a strain parameter; performing equivalent stress calculation according to the stress parameter to acquire a time history of a corrected equivalent stress response during service life, and calculating a creep damage in view of a minimum fracture stress curve; performing equivalent strain calculation according to the strain parameter to acquire a strain range of each time point during service life, and calculating a fatigue damage in view of a fatigue curve; and estimating a creep fatigue state of the device according to the creep damage and the fatigue damage. The present application is simple and easy to implement, and reduces the conservativeness and complexity of estimation by means of elastic analysis methods.

Acquiring an isochronous stress-strain curve of the device, and deducing creep data and plastic strain data of device materials — S1

Calculating creep constitutive parameters — S2

Performing inelastic creep analysis to acquire a stress parameter and a strain parameter — S3

Performing equivalent stress calculation to acquire a time history of a corrected equivalent stress response during service life, and calculating a creep damage; performing equivalent strain calculation to acquire a strain range during service life, and calculating a fatigue damage — S4

Estimating a creep fatigue state of the device — S5

**FIG. 1**

**Description**

**CROSS-REFERENCE TO RELATED APPLICATION**

This application claims priority to Chinese patent application No. 202310790182.6, filed on June 29, 2023 and entitled "CREEP FATIGUE STATE EVALUATION METHOD AND SYSTEM FOR HIGH-TEMPERATURE NUCLEAR POWER DEVICE", which is incorporated herein by reference in its entirety.

**TECHNICAL FIELD**

The present application relates to the technical field of service life evaluation for high-temperature nuclear power device, and in particular to a creep fatigue state evaluation method and system for a high-temperature nuclear power device.

**BACKGROUND**

The operating temperature of the fourth-generation high-temperature reactor reaches up to 600°C~800°C. During the long-term high-temperature service of components, coupled with factors such as creep deformation and stress relaxation, the mechanical properties of materials and the service life of devices will be seriously affected. Therefore, it is necessary to evaluate the impact of high-temperature in the design stage to promote the optimization of device structure design and processing and manufacturing. Currently, elastic analysis methods are mostly used for evaluating the strain, deformation and fatigue of a high-temperature nuclear power device, and if the evaluation fails, the structural design or system operating conditions are usually directly modified. However, the above analysis methods are relatively conservative and the process is not only complicated, but also costly and time-consuming.

Therefore, how to reasonably and efficiently evaluate the creep fatigue state of the high-temperature nuclear power device based on inelastic analysis methods has become an urgent issue to be solved in the existing technology.

**SUMMARY**

In view of the shortcomings of the prior art, the purpose of the present application is to provide a creep fatigue state evaluation method and system for a high-temperature nuclear power device, which features a simple process and easy implementation, reduces the conservatism and complexity of the existing elastic analysis method-based estimation, and improves the accuracy of the evaluation.

In order to solve the above issue, the present application mainly provides the following technical solutions:
In an aspect, the present application provides a creep fatigue state evaluation method for a high-temperature nuclear power device, including the following steps:

> step S1: acquiring an isochronous stress-strain curve of the device, and deducing creep data and plastic strain data of device materials according to the isochronous stress-strain curve;
> step S2: calculating creep constitutive parameters of the device materials according to the creep data of the device materials;
> step S3: performing inelastic creep analysis according to the creep constitutive parameters to acquire a time history of a stress parameter and a strain parameter;
> step S4: performing equivalent stress calculation according to the stress parameter to acquire a time history of a corrected equivalent stress response during service life, and calculating a creep damage based on a minimum fracture stress curve; performing equivalent strain calculation according to the strain parameter to acquire a strain range at each time point during service life, and calculating a fatigue damage based on a fatigue curve; and
> step S5: estimating the creep fatigue state of the device according to the creep damage and the fatigue damage.

Preferably, in step S1, the creep data corresponding to different stresses and different times are acquired according to the isochronous stress-strain curve.

Preferably, following steps are included in step S2:

> step S21: drawing a creep curve according to the creep data of the device materials; and
> step S22: constructing a creep parameterized model according to key point information of the creep curve to acquire the creep constitutive parameters of the device materials.

Preferably, a total strain of the device materials includes elastic strain, plastic strain and creep strain,

wherein the elastic strain and the plastic strain are acquired from a thermal tensile curve of the isochronous stress-strain curve, and the creep strain is acquired from the isochronous stress-strain curves corresponding to different service times.

Preferably, in step S3,

when performing the inelastic creep analysis, a static analysis step is first established, then a creep analysis step is established,

wherein the strain parameter is restricted, so that a strain averaged along a thickness of a maximum accumulated inelastic strain of the strain parameter does not exceed 1%; a surface strain caused by an equivalent linear distribution of the strain along the thickness does not exceed 2%; and a local strain at any point does not exceed 5%.

Preferably, in step S4, performing equivalent stress calculation based on the stress parameter is implemented by performing equivalent stress calculation based on the stress parameter at a critical point; and performing equivalent strain calculation according to the strain parameter is implemented by performing equivalent strain calculation based on the strain parameter at the critical point.

Preferably, following steps are included in step S5:

step S51: adding the creep damage and the fatigue damage, and determining whether a resulted sum meets a total creep-fatigue damage limit;

step S52: checking, under a premise of meeting the total creep-fatigue damage limit, the creep damage and the fatigue damage according to preset values; evaluating, if the checking is passed, a high-temperature creep fatigue state of the device as qualified; and evaluating, if the checking is failed, the high-temperature creep fatigue state of the device as unqualified.

In a second aspect, the present application provides a creep fatigue state evaluation system for a high-temperature nuclear power device, including:

a data acquisition module, configured to acquire isochronous stress-strain data of the device, and deduce creep data and plastic strain data of device materials according to the isochronous stress-strain data;

a creep constitutive parameter calculation module, configured to calculate creep constitutive parameters of the device materials according to the creep data;

a inelastic creep analysis module, configured to perform inelastic creep analysis according to the creep constitutive parameters to acquire a time history of a stress parameter and a strain parameter;

an equivalent calculation module, configured to perform equivalent stress calculation according to the stress parameter to acquire a time history of a corrected equivalent stress response during service life, and perform equivalent strain calculation according to the strain parameter to acquire a strain range of each time point during service life;

a damage calculation module, configured to calculate a creep damage according to the time history of the corrected equivalent stress response and a minimum fracture stress curve, and calculate a fatigue damage according to the strain range and a fatigue curve; and

a state evaluation module, configured to estimate the creep fatigue state of the device by combining the creep damage and the fatigue damage.

In a third aspect, the present application provides a computer-readable storage medium, wherein a computer program is stored in the computer-readable storage medium, and the computer program is loaded by a processor of a terminal device to implement steps of the above creep fatigue state evaluation method for a high-temperature nuclear power device.

In a fourth aspect, the present application provides a terminal device, including a processor and a computer-readable storage medium, wherein the computer-readable storage medium stores a computer program, and when the processor executes the computer program, the steps of the above creep fatigue state evaluation method for a high-temperature nuclear power device are implemented.

Compared with the prior art, the present application has the following beneficial effects:

The present application provides a creep fatigue state evaluation method and system for a high-temperature nuclear power device, wherein the strain and stress of the high-temperature nuclear power device are analyzed based on a inelastic analysis method to achieve an evaluation for the impact of high-temperature during the design stage. The process of the present application is simple and easy to be implemented, and can reduce the conservatism and complexity of existing estimation methods based on elastic analysis methods and improve the accuracy of the evaluation.

In the present application, different methods are adopted to perform equivalent stress calculation and equivalent strain calculation on the stress parameter and strain parameter acquired by inelastic creep analysis respectively to acquire the creep damage and fatigue damage, and the inelastic strain limit is set to ensure the rationality of the creep fatigue evaluation.

It should be understood that the above general description and the following detailed description are exemplary only and do not limit the present application.

## BRIEF DESCRIPTION OF THE DRAWINGS

In order to illustrate the technical solutions of the embodiments of the present application more clearly, the accompanying drawing to be used in the embodiments of the present application will be briefly introduced below.

FIG. 1 is a flowchart of creep-fatigue state evaluation in an embodiment of the present application;
FIG. 2 is a schematic diagram of an isochronous stress-strain curve in an embodiment of the present application;
FIG. 3 is a flowchart of acquiring creep constitutive parameters in an embodiment of the present application;
FIG. 4 is a schematic diagram of a creep curve in an embodiment of the present application;
FIG. 5 is a schematic diagram of setting a loading step in an embodiment of the present application;
FIG. 6 is a flowchart of calculating creep damage in an embodiment of the present application;
FIG. 7 is a schematic diagram of a corrected equivalent stress curve in an embodiment of the present application;
FIG. 8 is a flowchart of calculating the allowable creep time in an embodiment of the present application;
FIG. 9 is a schematic diagram of a temperature curve in an embodiment of the present application;
FIG. 10 is a schematic diagram of a three-dimensional representation of a minimum fracture stress curve in an embodiment of the present application;
FIG. 11 is a schematic diagram of a minimum fracture stress curve in an embodiment of the present application;
FIG. 12 is a schematic diagram of stress interpolation calculation in an embodiment of the present application;
FIG. 13 is a schematic diagram of temperature interpolation calculation in an embodiment of the present application;
FIG. 14 is a flowchart of calculating a fatigue damage in an embodiment of the present application;
FIG. 15 is a schematic diagram of a fatigue curve in an embodiment of the present application;
FIG. 16 is a schematic diagram of a creep-fatigue limit line in an embodiment of the present application; and
FIG. 17 is a structural block diagram of a creep fatigue state evaluation system for a high-temperature nuclear power device in an embodiment of the present application.

Reference numerals:

1 - Data acquisition module;
2- Creep constitutive parameter calculation module;
3- Inelastic creep analysis module;
4- Equivalent calculation module;
5- Damage calculation module;
6- State evaluation module;
a- Thermal tensile curve;
b- Isochronous stress-strain curve after 30 hr service;
c- Isochronous stress-strain curve after 300 hr service;
d - Isochronous stress-strain curve after $3 \times 10^3$ hr of service;
e- Isochronous stress-strain curve after $3 \times 10^4$ hr service;
f- Isochronous stress-strain curve after $3 \times 10^5$ hr service;
31- Static loading;
32- Creep loading.

## DETAILED DESCRIPTION

In order to better understand the technical solutions of the present application, the embodiments of the present application will be described in detail below in conjunction with the accompanying drawings.

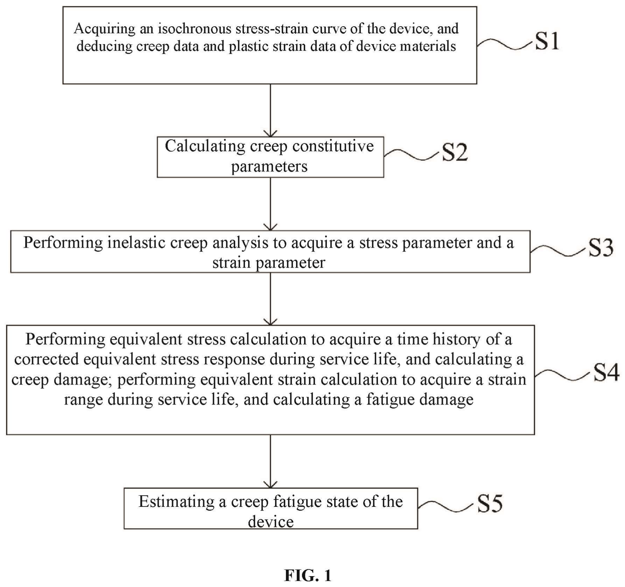

FIG. 1 is a flowchart of creep-fatigue state evaluation in an embodiment of the present application.

This embodiment provides a creep fatigue state evaluation method for a high-temperature device, as shown in FIG. 1, including the following steps:

step S1: acquiring an isochronous stress-strain curve of the device, and deducing creep data and plastic strain data of device materials according to the isochronous stress-strain curve;
step S2: calculating creep constitutive parameters of the device materials according to the creep data of the device materials;

step S3: performing inelastic creep analysis according to the creep constitutive parameters to acquire a time history of a stress parameter and a strain parameter;

step S4: performing equivalent stress calculation according to the stress parameter to acquire a time history of a corrected equivalent stress response during service life, and calculating creep damage based on a minimum fracture stress curve; performing equivalent strain calculation according to the strain parameter to acquire a strain range of each time point during service life, and calculating a fatigue damage based on a fatigue curve; and

step S5: estimating a creep fatigue state of the device according to the creep damage and the fatigue damage.

Each step is described in detail below.

Step S1: acquiring an isochronous stress-strain curve of the device, and deducing creep data and plastic strain data of device materials according to the isochronous stress-strain curve.

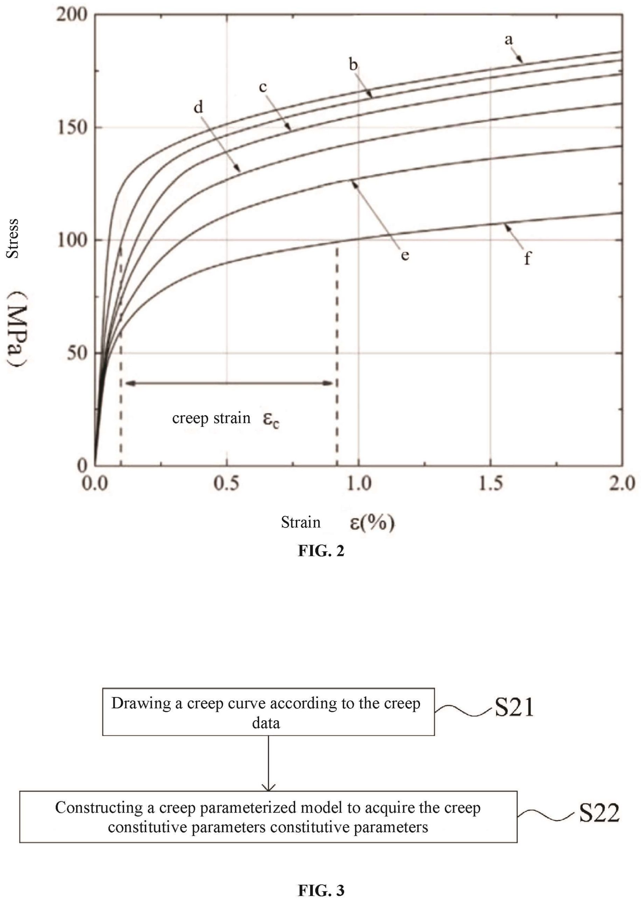

FIG. 2 is a schematic diagram of the isochronous stress-strain curve of an embodiment of the present application (ASME Volume III, Part 5, Figure HBB-T-1800 provides isochronous stress-strain curves for specific materials). As shown in FIG. 2, the thermal tensile curve *a* contains only plastic strain and elastic strain, while the isochronous stress-strain curve *b* after 30 hr of service, the isochronous stress-strain curve c after 300 hr of service, the isochronous stress-strain curve *d* after $3 \times 10^3$ hr of service, the isochronous stress-strain curve e after $3 \times 10^4$ hr of service and the isochronous stress-strain curve *f* after $3 \times 10^5$ hr of service only contain creep strain and elastic strain.

As shown in FIG. 2, creep data corresponding to different stresses and different times can be acquired according to the isochronous stress-strain curves. The total strain of the device material includes elastic strain, plastic strain and creep strain, wherein the elastic strain and plastic strain are acquired from the thermal tensile curve *a* in FIG. 2, and the creep strain is acquired from the isochronous stress-strain curves of different service times except the thermal tensile curve *a* in FIG. 2 (the isochronous stress-strain curve *b* after 30 hr of service, the isochronous stress-strain curve c after 300 hr of service, the isochronous stress-strain curve *d* after $3 \times 10^3$ hr of service, the isochronous stress-strain curve e after $3 \times 10^4$ hr of service and the isochronous stress-strain curve *f* after $3 \times 10^5$ hr of service). The specific expression is as follows:

$$\varepsilon_T = \varepsilon_e + \varepsilon_p + \varepsilon_c,$$

where $\varepsilon_T$ is the total strain of the device materials, $\varepsilon_e$ is the elastic strain, $\varepsilon_p$ is the plastic strain, and $\varepsilon_c$ is the creep strain.

Step S2: calculating creep constitutive parameters of the device materials according to the creep data of the device materials.

FIG. 3 is a flowchart of acquiring creep constitutive parameters according to an embodiment of the present application. The step of calculating creep constitutive parameters of the device materials according to the creep data of the device materials includes following steps:

step S21: drawing a creep curve according to the creep data of the device materials; and

step S22: constructing a creep parameterized model according to key point information of the creep curve to acquire the creep constitutive parameters of the device materials.

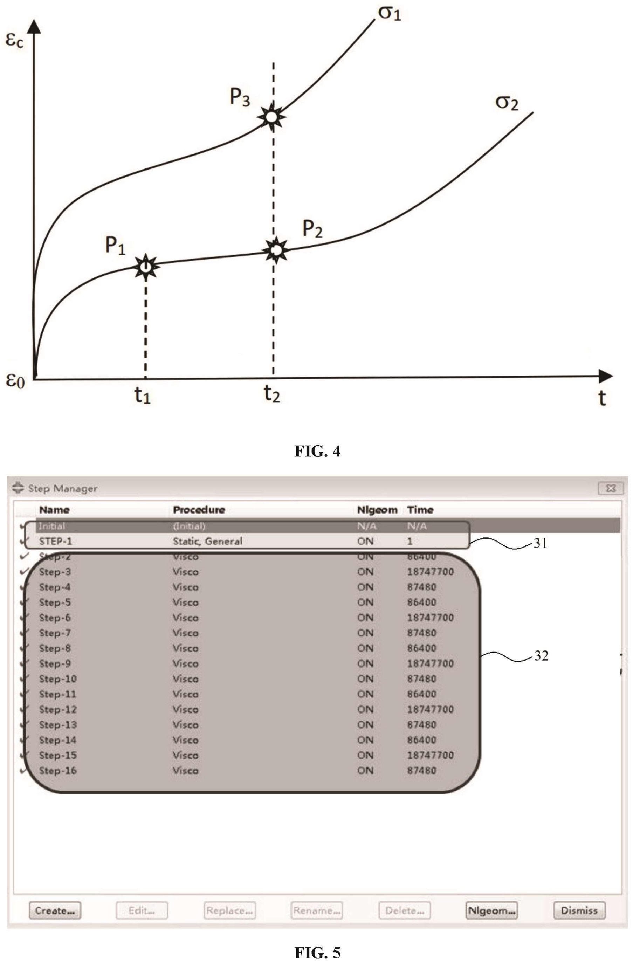

FIG. 4 is a schematic diagram of the creep curve according to an embodiment of the present application.

Based on the isochronous stress-strain curves in FIG. 2, creep strain for each duration and multiple stresses can be deduced as follows:

$$\varepsilon_c = \varepsilon_T - \varepsilon_e.$$

Thus, the creep strain curves of different stress levels varying with duration are acquired as shown in FIG. 4.

As shown in FIG. 4, the creep constitutive parameters required by commercial mechanics software can be deduced. In this embodiment, the ABAQUS software is used, and the adopted Norton-Bailey creep parameterized constitutive model is as follows:

$$\varepsilon_c = \frac{A}{m+1} \sigma^n t^{m+1},$$

where $A$, $n$, and $m$ are the creep constitutive parameters of the device materials related to temperature, $A$ is the Norton-Bailey coefficient, *m* is the time index, *n* is the stress index, σ is the stress, and *t* is the creep time.

Based on the three key points $P_1(t_1, \varepsilon_{c1}, \sigma_2)$, $P_2(t_2, \varepsilon_{c2}, \sigma_2)$, $P_3(t_2, \varepsilon_{c3}, \sigma_1)$ on the creep curves under two sets of stresses as shown in FIG. 4, the follows are calculated:

$$m = \frac{\lg(\varepsilon_{c1}/\varepsilon_{c2})}{\lg(t_1/t_2)} - 1,$$

$$n = \frac{\lg(\varepsilon_{c2}/\varepsilon_{c3})}{\lg(\sigma_1/\sigma_2)},$$

$$A = \frac{\varepsilon_{c1} m}{\sigma_2^{\lg\left(\frac{\varepsilon_{c2}}{\varepsilon_{c3}}\right)/\lg\left(\frac{\sigma_2}{\sigma_1}\right)} t_1^{\lg\left(\frac{\varepsilon_{c1}}{\varepsilon_{c2}}\right)/\lg\left(\frac{t_1}{t_2}\right)}}.$$

Step S3: performing inelastic creep analysis according to the creep constitutive parameters to acquire a time history of a stress parameter and a strain parameter.

FIG. 5 is a schematic diagram of setting a loading step in an embodiment of the present application.

In the process of inelastic creep analysis combined with the Norton-Bailey creep parameterized constitutive model, as shown in FIG. 5, static loading 31 is first performed, i.e., a static analysis step is established, such as a deadweight load, to establish an initial load; then creep loading 32 is applied, i.e., a creep analysis step is established, loads related to time and temperature are considered, and creep analysis is performed. While ensuring accuracy, incremental steps may be minimized to improve calculation efficiency.

In this embodiment, the strain parameter is restricted, so that the strain parameter acquired by calculation must satisfy the following conditions: a strain averaged along a thickness of a maximum accumulated inelastic strain does not exceed 1%; a surface strain caused by an equivalent linear distribution of the strain along the thickness does not exceed 2%; and a local strain at any point does not exceed 5%.

Step S4: performing equivalent stress calculation based on the stress parameter to acquire a time history of a corrected equivalent stress response during service life, and calculating a creep damage based on a minimum fracture stress curve; performing equivalent strain calculation according to the strain parameter to acquire a strain range of each time point during service life, and calculating a fatigue damage based on a fatigue curve.

In this embodiment, performing equivalent stress calculation according to the stress parameter is implemented by performing equivalent stress calculation based on the stress parameter at a critical point; and performing equivalent strain calculation according to the strain parameter is implemented by performing equivalent strain calculation based on the strain parameter at the critical point.

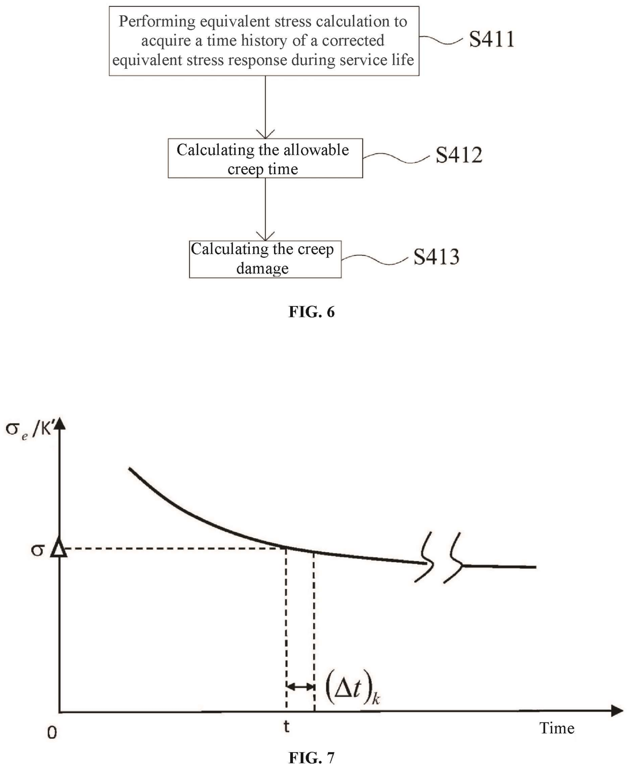

FIG. 6 is a flowchart of calculating creep damage in an embodiment of the present application.

As shown in FIG. 6, the step of calculating creep damage includes the following steps.

Step S411: performing equivalent stress calculation according to the stress parameter at a critical point to acquire a time history of a corrected equivalent stress response during service life.

In the above step, the equivalent stress calculation is implemented by performing calculation based on the Mises stress and the principal stresses in three directions at each time point during service life at the critical point. The calculation of a stress value is related to time, so the Mises stress and the principal stresses in three directions can be calculated at each time point. Therefore, the equivalent stress is acquired by calculating the time history of the equivalent stress response during service life according to the following formula:

$$\sigma_e = \bar{\sigma} \cdot \exp[C \cdot \left(\frac{J_1}{S_s} - 1\right)],$$

$$J_1 = \sigma_1 + \sigma_2 + \sigma_3,$$

$$S_s = \left( \sigma_1^2 + \sigma_2^2 + \sigma_3^2 \right)^{1/2},$$

where $\sigma_e$ is the equivalent stress, $\overline{\sigma}$ is the Mises stress, $C$ is the material constant (e.g., for 316 stainless steel, $C = 0.24$), and $\sigma_1$, $\sigma_2$, and $\sigma_3$ are the principal stresses in three directions respectively.

FIG. 7 is a schematic diagram of a corrected equivalent stress curve in an embodiment of the present application.

As shown in FIG. 7, in the schematic diagram of the curve of the equivalent stress corrected with a coefficient $K'$ (for inelastic analysis, $K' = 0.67$), the curve is divided into $q$ time periods according to an interval $\Delta t$, and the stress $\sigma = \sigma_e / K'$ at the corresponding time point is extracted to acquire the time history of the corrected equivalent stress response during service life.

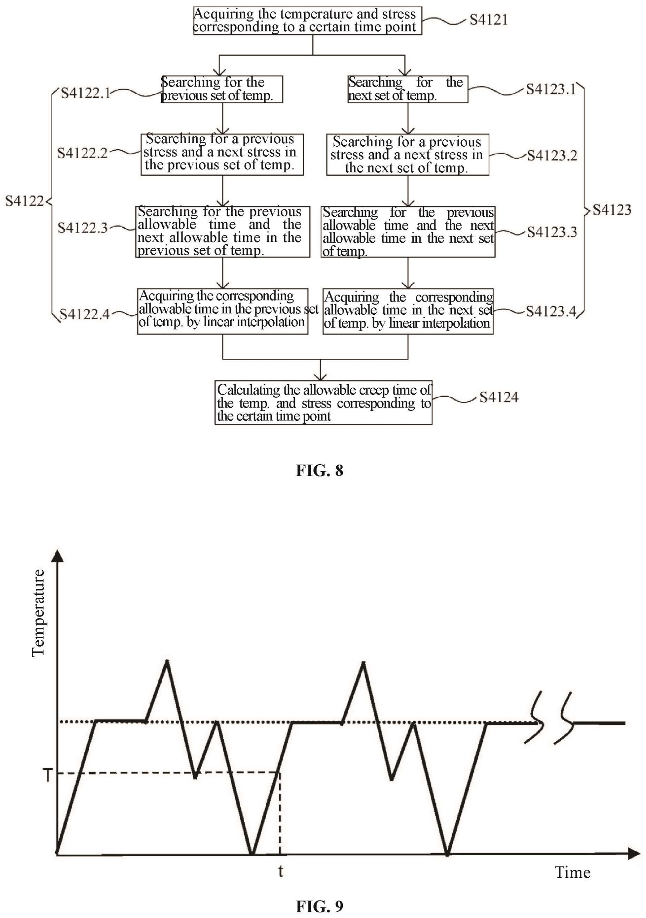

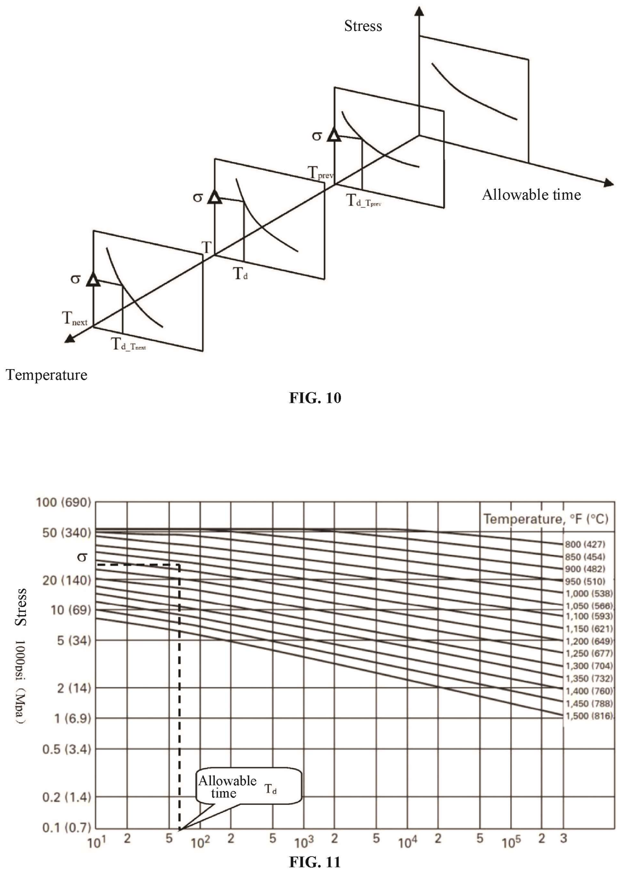

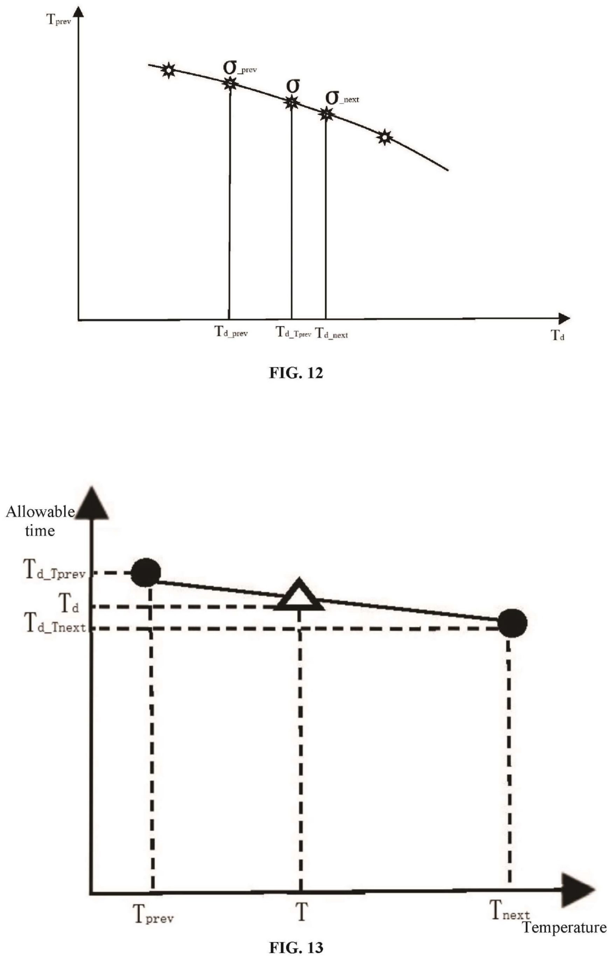

FIG. 8 is a flowchart of calculating the allowable creep time in an embodiment of the present application, FIG. 9 is a schematic diagram of a temperature curve in an embodiment of the present application, FIG. 10 is a schematic diagram of a three-dimensional representation of a minimum fracture stress curve in an embodiment of the present application, FIG. 11 is a schematic diagram of a minimum fracture stress curve in an embodiment of the present application, FIG. 12 is a schematic diagram of stress interpolation calculation in an embodiment of the present application, and FIG. 13 is a schematic diagram of temperature interpolation calculation in an embodiment of the present application.

Step S412: calculating the allowable creep time. As shown in FIG. 8, this step includes the following steps.

Step S4121: acquiring the temperature T and stress $\sigma$ corresponding to a certain time point t.

In the above step, the stress $\sigma$ corresponding to the certain time point t can be acquired from FIG. 7, and FIG. 9 is a transient curve of time vs. temperature, from which the temperature T corresponding to the certain time point t can be acquired.

Step S4122: searching for the previous set of temperatures $T_{prev}$ for the temperature T corresponding to the certain time point t, and calculating the corresponding allowable time $T_{d\_Tprev}$ for the previous set of temperatures $T_{prev}$. This step includes the following steps.

Step S4122.1: as shown in FIG. 10, the minimum fracture stress curve is composed of a specific set of temperatures, the corresponding minimum fracture stress and the allowable time. Each set of temperatures corresponds to a set of data. In FIG. 10, the previous set of temperatures $T_{prev}$ lower than the temperature T corresponding to the certain time point t can be searched for.

Step S4122.2: searching for a previous stress $\sigma_{\_prev}$ lower than the stress $\sigma$ corresponding to the certain time point $t$ and a next stress $a$ higher than the stress $\sigma$ corresponding to the certain time point t in the previous set of temperatures $T_{prev}$, as shown in FIG. 10.

Step S4122.3: searching for the previous allowable time $T_{d\_prev}$ corresponding to the previous set of temperatures $T_{prev}$ and the previous stress $\sigma_{\_prev}$, and the next allowable time $T_{d\_next}$ corresponding to the previous set of temperatures $T_{prev}$ and the next stress $\sigma_{\_next}$, as shown in FIG. 11, which is a schematic diagram of minimum fracture stress curves (ASME Volume III, Book 5, the Table HBB-I-14.6 provides the minimum fracture stress strength of specific materials).

Step S4122.4: acquiring, as shown in FIG. 12, the allowable time $T_{d\_prev}$ corresponding to the stress $\sigma$ at the certain time point t in the previous set of temperatures $T_{prev}$ by linear interpolation, that is:

$$T_{d\_T_{prev}} = T_{d\_next} - \frac{(\sigma - \sigma_{\_prev})(T_{d_{next}} - T_{d\ prev})}{(\sigma_{\_prev} - \sigma_{\_next})},$$

where $\sigma$ is the stress corresponding to a certain time point, $\sigma_{\_prev}$ is the previous stress, $\sigma_{\_next}$ is the next stress, $T_{d\_prev}$ is the previous allowable time, $T_{d\_next}$ is the next allowable time, and $T_{d\_T_{prev}}$ is the corresponding allowable time in the previous set of temperatures.

Step S4123: searching for a next set of temperatures $T_{next}$ of the temperature T corresponding to the certain time point $t$, and calculating the allowable time $T_{d\_T_{prev}}$ corresponding to the next set of temperatures $T_{next}$. This step includes the following steps.

Step S4123.1: searching for the next set of temperatures $T_{next}$ lower than the temperature T corresponding to the certain time $t$ in FIG. 10.

Step S4123.2: searching for a previous stress $\sigma'_{\_prev}$ lower than the stress $\sigma$ corresponding to the certain time point $t$ and a next stress $\sigma'_{\_next}$ higher than the stress $\overline{\sigma}$ corresponding to the certain time point $t$ in the next set of temperatures $T_{next}$, as shown in FIG. 10.

Step S4123.3: searching for the previous allowable time $T'_{d\_prev}$ corresponding to the next set of temperatures $T_{next}$ and the previous stress $\sigma'_{\_prev}$, and the next allowable time $T'_{d\_next}$ corresponding to the next set of temperatures $T_{next}$ and the next stress $\sigma'_{\_next}$, as shown in FIG. 11.

Step S4123.4: acquiring, as shown in FIG. 12, the allowable time $T_{d\_next}$, corresponding to the stress σ at the certain time point $t$ in the next set of temperatures $T_{next}$ by linear interpolation. The calculation principle is the same as that for the allowable time $T_{d\_Tprev}$ corresponding to the previous set of temperatures $T_{prev}$ in the step S4122.4, and will not be repeated here.

Step S4124: calculating, as shown in FIG. 13, the allowable creep time of the temperature T and stress σ corresponding to the certain time point $t$:

$$(T_d)_k = T_{d\ T_{next}} + \frac{(T_{d\_Tprev} - T_{d\_T_{next}})(T_{next} - T)}{(T_{next} - T_{prev})},$$

where T is the temperature corresponding to the certain time point $t$, $(T_d)_k$ is the allowable creep time, and k is the interval.

Step S413: calculating the creep damage, that is:

$$\sum_{k=1}^{q}\left(\frac{\Delta t}{T_d}\right)_k,$$

where $q$ is the number of intervals and $\Delta t$ is the duration of the interval k.

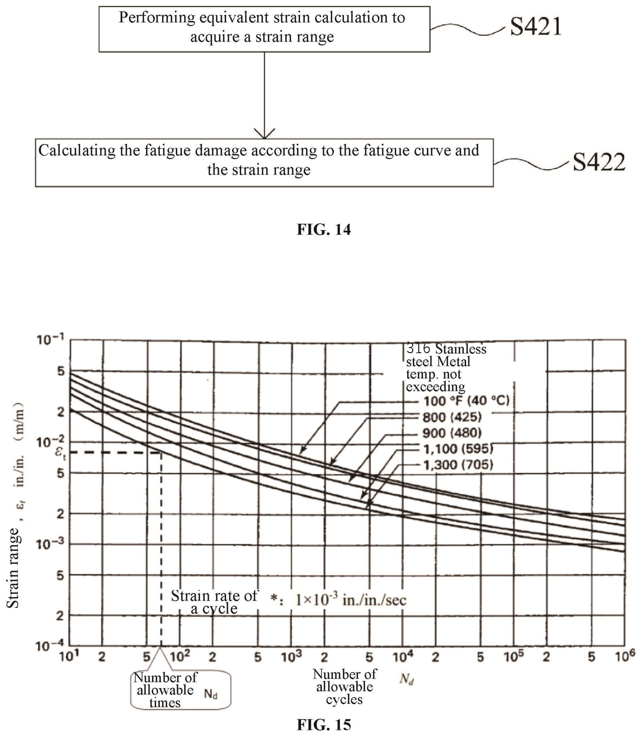

FIG. 14 is a flowchart of calculating a fatigue damage in an embodiment of the present application.

As shown in FIG. 14, the step of calculating the fatigue damage includes the following steps.

Step S421: performing equivalent strain calculation based on the strain parameter at a critical point to acquire a strain range.

In the above step, an extreme (maximum or minimum) state point of a cycle is selected, in which the strain component of interest among six strain components may be selected as a reference variable of the extreme state point, and the strain state at this time point is represented by "0"; and the strain component at 0 is subtracted from the strain component corresponding to each time point i in the cycle process to calculate the equivalent strain range of each time point as follows:

$$\Delta\varepsilon_{xi} = \varepsilon_{xi} - \varepsilon_{xo},$$

$$\Delta\varepsilon_{yi} = \varepsilon_{yi} - \varepsilon_{yo},$$

$$\Delta\varepsilon_{zi} = \varepsilon_{zi} - \varepsilon_{zo},$$

$$\Delta\gamma_{xyi} = \gamma_{xyi} - \gamma_{xyo},$$

$$\Delta\gamma_{xzi} = \gamma_{xzi} - \gamma_{xzo},$$

$$\Delta\gamma_{yzi} = \gamma_{yzi} - \gamma_{yzo},$$

$$\Delta\varepsilon_{equiv,i} = \frac{\sqrt{2}}{2(1+v^*)}\left[\begin{array}{c}\left(\Delta\varepsilon_{x,i}-\Delta\varepsilon_{y,i}\right)^2+\left(\Delta\varepsilon_{y,i}-\Delta\varepsilon_{z,i}\right)^2+\left(\Delta\varepsilon_{x,i}-\Delta\varepsilon_{z,i}\right)^2\\+\dfrac{3}{2}\left(\Delta\gamma_{xy,i}^2+\Delta\gamma_{xz,i}^2+\Delta\gamma_{yz,i}^2\right)\end{array}\right]^{1/2},$$

where $\Delta\varepsilon_{equiv,i}$ is the equivalent strain range at each time point, $\varepsilon_{xi}$, $\varepsilon_{yi}$, $\varepsilon_{zi}$, $\gamma_{xvi}$, $\gamma_{xzi}$, and $\gamma_{yzi}$ represent the strain values at certain time points, $\varepsilon_{xo}$, $\varepsilon_{yo}$, $\varepsilon_{zo}$, $\gamma_{xyi}$, $\gamma_{xzi}$, and $\gamma_{yzi}$ represent the strain values at the initial time point, $\Delta\varepsilon_{xi}$, $\Delta\varepsilon_{yi}$, $\Delta\varepsilon_{zi}$, $\Delta\gamma_{xzi}$, $\Delta\gamma_{xzi}$, and $\Delta\gamma_{yzi}$ represent the strain differences, and for the inelastic analysis, $v^* = 0.5$.

The strain range $\varepsilon_t$ is determined by the maximum value at each time point $\Delta\varepsilon_{equiv,i}$ of the equivalent strain range, that is, $\varepsilon_t = \Delta\varepsilon_{max} = \max(\varepsilon_{equiv,i})$.

FIG. 15 is a schematic diagram of a fatigue curve in an embodiment of the present application (ASME Volume III, Part 5, Figure HBB-T-1420-1 provides fatigue curve data for specific materials).

Step S422: selecting the corresponding fatigue curve according to the highest value of the corresponding temperature in the cycle, and calculating the fatigue damage according to the fatigue curve and the strain range.

In the above step, as shown in FIG. 15, the allowable number of fatigue times $N_d$ corresponding to the strain range is calculated by interpolation based on the fatigue curve of the device materials, and the fatigue damage is calculated, that is:

$$\sum_{j=1}^{P}\left(\frac{n}{N_d}\right)_j,$$

wherein P is the number of cycles, and $(n)_j$ is the number of actions of the $j^{th}$ cycle.

Step S5: estimating the creep fatigue state of the device according to the creep damage and the fatigue damage. This step includes the following steps.

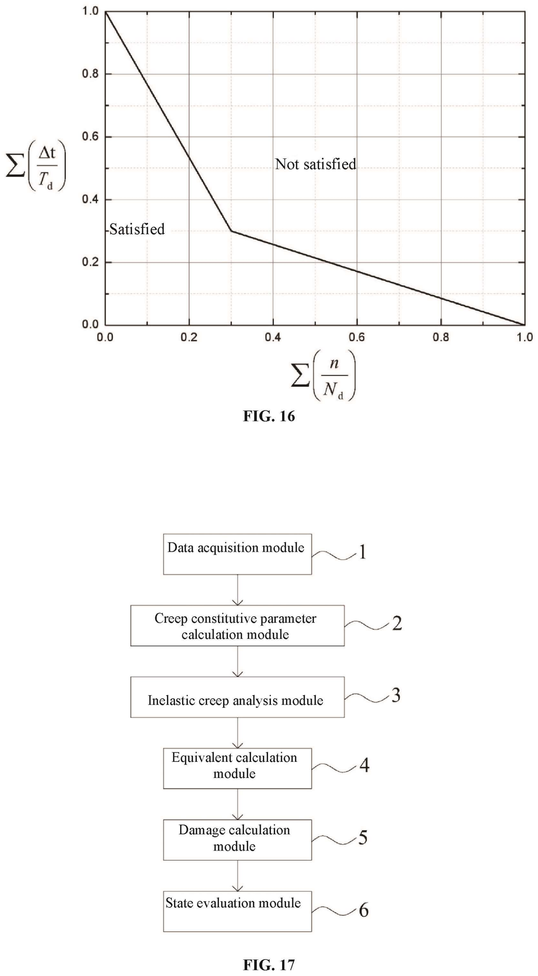

FIG. 16 is a schematic diagram of a creep - fatigue limit line in an embodiment of the present application (ASME Volume III, Part 5, Figure HBB-T-1420-2 provides creep - fatigue limit curves for specific materials).

Step S51: adding the creep damage and the fatigue damage, and determining whether the resulted sum satisfies the total creep - fatigue damage limit D as shown in FIG. 16. The sum of the creep damage and the fatigue damage must satisfy the following relationship:

$$\sum_{j=1}^{P}\left(\frac{n}{N_d}\right)_j+\sum_{k=1}^{q}\left(\frac{\Delta t}{T_d}\right)_k \leq D.$$

Step S52: checking, under a premise of satisfying the total creep-fatigue damage limit, the creep damage and fatigue damage according to the envelope curve shown in FIG. 16.

In the above step, when the creep-fatigue damage is within the envelope, that is, $\sum_{j=1}^{P}\left(\frac{n}{N_d}\right)_j \leq 1$ and $\sum_{k=1}^{q}\left(\frac{\Delta t}{T_d}\right)_k \leq 1$ are satisfied for the creep-fatigue damage at the same time, the checking for the creep fatigue damage is passed, and it is considered that the high-temperature creep fatigue state of the device is evaluated as qualified; otherwise, the high-temperature creep fatigue state of the device is evaluated as unqualified and needs to be improved by changing the structural design, changing the load-bearing condition design or reducing the designed service life, and then re-evaluation will be performed after the improvement.

It should be noted that all stress-strain parameters in this embodiment meet the requirements of industry regulations, for example, the isochronous stress-strain material data should meet the requirements of the standard of ASME Volume III, Part 5; the creep constitutive parameters should meet the requirements of commercial mechanical analysis software; the strain meets the requirements for the maximum cumulative inelastic strain of the standard of ASME Volume III, Part 5; and the calculation and criterion of fatigue damage and creep damage meet the requirements of the standard of ASME Volume III, Part 5.

FIG. 17 is a structural block diagram of a creep fatigue state evaluation system for a high-temperature nuclear power device in an embodiment of the present application.

This embodiment provides a creep fatigue state evaluation system for a high-temperature nuclear power device. As shown in FIG. 17, the system includes a data acquisition module 1, a creep constitutive parameter calculation module 2, a inelastic creep analysis module 3, an equivalent calculation module 4, a damage calculation module 5 and a state evaluation module 6 connected in sequence.

The data acquisition module 1 is configured to acquire isochronous stress-strain data of the device, and deduce creep data and plastic strain data of materials according to the isochronous stress-strain data.

The creep constitutive parameter calculation module 2 is configured to calculate creep constitutive parameters of the device materials according to the creep data of the device materials.

The inelastic creep analysis module 3 is configured to perform inelastic creep analysis according to the creep constitutive parameters to acquire a time history of a stress parameter and a strain parameter.

The equivalent calculation module 4 is configured to perform equivalent stress calculation according to the stress parameter to acquire a time history of a corrected equivalent stress response during service life, and perform equivalent strain calculation according to the strain parameter to acquire a strain range of each time point during service life.

The damage calculation module 5 is configured to calculate a creep damage according to the time history of the corrected equivalent stress response during service life and a minimum fracture stress curve, and calculate a fatigue damage according to the strain range and a fatigue curve.

The state evaluation module 6 is configured to estimate the creep fatigue state of the device by combining the creep damage and the fatigue damage.

An embodiment provides a computer-readable storage medium, in which a computer program is stored. The computer program is loaded by a processor of a terminal device to implement steps of the above-mentioned creep fatigue state evaluation method for a high-temperature nuclear power device.

An embodiment provides a terminal device, including a processor and a computer-readable storage medium. The memory stores a computer program, and when the processor executes the computer program, steps of the above-mentioned creep fatigue state evaluation method for a high-temperature nuclear power device are implemented.

Steps involved in the above creep fatigue state evaluation system for a high-temperature nuclear power device, the computer readable storage medium and the terminal device correspond to the creep fatigue state evaluation method for a high-temperature nuclear power device, and for specific implementations, please refer to the relevant description part of the creep fatigue state evaluation method for a high-temperature nuclear power device. The term "computer readable storage medium" should be understood as a single medium or multiple media including one or more instruction sets; and it should also be understood to include any medium that can store, encode or carry an instruction set for execution by a processor and enable the processor to perform any method in the present application.

It should be understood by those skilled in the art that each module or each step of the present application described above can be implemented by a general-purpose computer device, and optionally, they can be implemented by a program code executable by a computing device, so that they can be stored in a storage device and executed by the computing device, or they can be made into individual integrated circuit modules, or multiple modules or steps therein can be made into a single integrated circuit module for implementation. The present application is not limited to any specific combination of hardware and software.

Although the above describes the specific implementations of the present application in conjunction with the accompanying drawings, it is not intended to limit the scope of protection of the present application. Technical persons in the relevant field should understand that on the basis of the technical solution of the present application, various modifications or deformations that can be made by technical persons in this field without creative work are still within the scope of protection of the present application.

**Claims**

1. A creep fatigue state evaluation method for a high-temperature nuclear power device, comprising following steps:

   step S1: acquiring an isochronous stress-strain curve of the device, and deducing creep data and plastic strain data of device materials according to the isochronous stress-strain curve;

   step S2: calculating creep constitutive parameters of the device materials according to the creep data of the device materials;

   step S3: performing inelastic creep analysis according to the creep constitutive parameters to acquire a time history of a stress parameter and a strain parameter;

step S4: performing equivalent stress calculation according to the stress parameter to acquire a time history of a corrected equivalent stress response during service life, and calculating a creep damage based on a minimum fracture stress curve; performing equivalent strain calculation according to the strain parameter to acquire a strain range at each time point during service life, and calculating a fatigue damage based on a fatigue curve; and

step S5: estimating the creep fatigue state of the device according to the creep damage and the fatigue damage.

2. The creep fatigue state evaluation method for a high-temperature nuclear power device according to claim 1, wherein in step S1,

the creep data corresponding to different stresses and different times are acquired according to the isochronous stress-strain curve.

3. The creep fatigue state evaluation method for a high-temperature nuclear power device according to claim 1, wherein following steps are included in step S2:

step S21: drawing a creep curve according to the creep data of the device materials; and

step S22: constructing a creep parameterized model according to key point information of the creep curve to acquire the creep constitutive parameters of the device materials.

4. The creep fatigue state evaluation method for a high-temperature nuclear power device according to claim 1, wherein

a total strain of the device materials includes elastic strain, plastic strain and creep strain,

the elastic strain and the plastic strain are acquired from a thermal tensile curve of the isochronous stress-strain curve, and the creep strain is acquired from the isochronous stress-strain curves corresponding to different service times.

5. The creep fatigue state evaluation method for a high-temperature nuclear power device according to claim 1, wherein in step S3,

when performing the inelastic creep analysis, a static analysis step is first established, then a creep analysis step is established,

the strain parameter is restricted, so that a strain averaged along a thickness of a maximum accumulated inelastic strain of the strain parameter does not exceed 1%; a surface strain caused by an equivalent linear distribution of the strain along the thickness does not exceed 2%; and a local strain at any point does not exceed 5%.

6. The creep fatigue state evaluation method for a high-temperature nuclear power device according to claim 1, wherein in step S4,

performing equivalent stress calculation according to the stress parameter is implemented by performing equivalent stress calculation based on the stress parameter at a critical point; and

performing equivalent strain calculation according to the strain parameter is implemented by performing equivalent strain calculation based on the strain parameter at the critical point.

7. The creep fatigue state evaluation method for a high-temperature nuclear power device according to claim 1, wherein following steps are comprised in step S5:

step S51: adding the creep damage and the fatigue damage, and determining whether a resulted sum satisfies a total creep-fatigue damage limit;

step S52: checking, under a premise of satisfying the total creep-fatigue damage limit, the creep damage and the fatigue damage according to preset values; evaluating, if the checking is passed, a high-temperature creep fatigue state of the device as qualified; and evaluating, if the checking is failed, the high-temperature creep fatigue state of the device as unqualified.

8. A creep fatigue state evaluation system for a high-temperature nuclear power device, comprising:

a data acquisition module, configured to acquire isochronous stress-strain data of the device, and deduce creep data and plastic strain data of device materials according to the isochronous stress-strain data;

a creep constitutive parameter calculation module, configured to calculate creep constitutive parameters of the device materials according to the creep data;

a inelastic creep analysis module, configured to perform inelastic creep analysis according to the creep constitutive parameters to acquire a time history of a stress parameter and a strain parameter;

an equivalent calculation module, configured to perform equivalent stress calculation according to the stress parameter to acquire a time history of a corrected equivalent stress response during service life, and perform equivalent strain calculation according to the strain parameter to acquire a strain range of each time point during service life;

a damage calculation module, configured to calculate a creep damage according to the time history of the corrected equivalent stress response and a minimum fracture stress curve, and calculate a fatigue damage according to the strain range and a fatigue curve; and

a state evaluation module, configured to estimate the creep fatigue state of the device by combining the creep damage and the fatigue damage.

9. A computer-readable storage medium, wherein a computer program is stored in the computer-readable storage medium, and the computer program is loaded by a processor of a terminal device to implement the creep fatigue state evaluation method for a high-temperature nuclear power device according to any one of claims 1 to 7.

10. A terminal device, comprising a processor and a computer-readable storage medium, wherein the memory stores a computer program, and when the processor executes the computer program, the creep fatigue state evaluation method for a high-temperature nuclear power device according to any one of claims 1 to 7 is implemented.

Acquiring an isochronous stress-strain curve of the device, and deducing creep data and plastic strain data of device materials — S1

Calculating creep constitutive parameters — S2

Performing inelastic creep analysis to acquire a stress parameter and a strain parameter — S3

Performing equivalent stress calculation to acquire a time history of a corrected equivalent stress response during service life, and calculating a creep damage; performing equivalent strain calculation to acquire a strain range during service life, and calculating a fatigue damage — S4

Estimating a creep fatigue state of the device — S5

**FIG. 1**

**FIG. 2**

| Drawing a creep curve according to the creep data | S21 |
| Constructing a creep parameterized model to acquire the creep constitutive parameters constitutive parameters | S22 |

**FIG. 3**

**FIG. 4**

**FIG. 5**

Performing equivalent stress calculation to acquire a time history of a corrected equivalent stress response during service life ⟋ S411

Calculating the allowable creep time ⟋ S412

Calculating the creep damage ⟋ S413

**FIG. 6**

**FIG. 7**

**FIG. 8**

**FIG. 9**

**FIG. 10**

**FIG. 11**

**FIG. 12**

**FIG. 13**

```
┌─────────────────────────────────────────┐
│ Performing equivalent strain calculation to │ ─── S421
│        acquire a strain range             │
└─────────────────────────────────────────┘
                    │
                    ▼
┌─────────────────────────────────────────┐
│ Calculating the fatigue damage according to the fatigue curve and │ ─── S422
│              the strain range             │
└─────────────────────────────────────────┘
```

**FIG. 14**

**FIG. 15**

**FIG. 16**

**FIG. 17**

**EP 4 738 176 A1**

## INTERNATIONAL SEARCH REPORT

International application No.

**PCT/CN2024/090718**

### A. CLASSIFICATION OF SUBJECT MATTER

G06F 30/20(2020.01)i; G06F 119/02(2020.01)i; G06F 119/04(2020.01)i; G06F 119/08(2020.01)i; G06F 119/14(2020.01)i

According to International Patent Classification (IPC) or to both national classification and IPC

### B. FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 高温, 蠕变, 疲劳, 评估, 应力, 应变, 曲线, 等时, 塑性应变, 本构参数, 非弹性, 时间, 等效, 修正, 断裂, 损伤, 弹性, high temperature, creep, fatigue, evaluation, stress, strain, curve, isochronal, plastic strain, constitutive parameter, inelasticity, time, equivalence, correction, fracture, injury, elasticity

### C. DOCUMENTS CONSIDERED TO BE RELEVANT

| Category* | Citation of document, with indication, where appropriate, of the relevant passages | Relevant to claim No. |
|---|---|---|
| PX | CN 116956563 A (SHANGHAI NUCLEAR ENGINEERING RESEARCH & DESIGN INSTITUTE CO., LTD.) 27 October 2023 (2023-10-27) claims 1-10, and description, paragraphs 0058-0103 | 1-10 |
| A | CN 109885874 A (EAST CHINA UNIVERSITY OF SCIENCE AND TECHNOLOGY) 14 June 2019 (2019-06-14) description, paragraphs 0067-0134 | 1-10 |
| A | CN 113049376 A (EAST CHINA UNIVERSITY OF SCIENCE AND TECHNOLOGY) 29 June 2021 (2021-06-29) entire document | 1-10 |
| A | CN 103761365 A (HEFEI GENERAL MACHINERY RESEARCH INSTITUTE) 30 April 2014 (2014-04-30) entire document | 1-10 |
| A | CN 108931448 A (SOUTH CHINA UNIVERSITY OF TECHNOLOGY) 04 December 2018 (2018-12-04) entire document | 1-10 |

☑ Further documents are listed in the continuation of Box C.    ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 July 2024** | **22 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 738 176 A1**

**INTERNATIONAL SEARCH REPORT**

| International application No. |
|---|
| **PCT/CN2024/090718** |

| C. | DOCUMENTS CONSIDERED TO BE RELEVANT | |
|---|---|---|
| Category* | Citation of document, with indication, where appropriate, of the relevant passages | Relevant to claim No. |
| A | CN 115691720 A (NANJING UNIVERSITY OF AERONAUTICS AND ASTRONAUTICS) 03 February 2023 (2023-02-03) entire document | 1-10 |
| A | US 2021341365 A1 (EAST CHINA UNIVERSITY OF SCIENCE AND TECHNOLOGY) 04 November 2021 (2021-11-04) entire document | 1-10 |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 116956563 | A | 27 October 2023 | None | | | |
| CN | 109885874 | A | 14 June 2019 | WO | 2020143284 | A1 | 16 July 2020 |
| | | | | US | 2022026326 | A1 | 27 January 2022 |
| | | | | US | 2023103274 | A9 | 30 March 2023 |
| CN | 113049376 | A | 29 June 2021 | None | | | |
| CN | 103761365 | A | 30 April 2014 | None | | | |
| CN | 108931448 | A | 04 December 2018 | None | | | |
| CN | 115691720 | A | 03 February 2023 | None | | | |
| US | 2021341365 | A1 | 04 November 2021 | WO | 2021068148 | A1 | 15 April 2021 |
| | | | | CN | 113785186 | A | 10 December 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202310790182